Europäisches Patentamt

European Patent Office

Office européen des brevets

(11) Publication number: **0 422 585 A2**

(12) **EUROPEAN PATENT APPLICATION**

(21) Application number: **90119344.1**

(22) Date of filing: **09.10.90**

(51) Int. Cl.5: **C02F 1/28**, C02F 1/58, C02F 1/74

(30) Priority: **13.10.89 US 421288**

(43) Date of publication of application:
**17.04.91 Bulletin 91/16**

(84) Designated Contracting States:
**AT BE CH DE DK ES FR GB IT LI NL SE**

(71) Applicant: **CALGON CARBON CORPORATION**
**500 Calgon Carbon Drive**
**Pittsburgh Pennsylvania 15205(US)**

Applicant: **THE BOARD OF TRUSTEES OF THE**
**UNIVERSITY OF ILLINOIS**
**349 Administration Building, University of**
**Illinois, 506 South Wright Street**
**Urbana, Illinois 61801(US)**

(72) Inventor: **Suidan, Makram T., Univ. of**
**Cincinnati, Dept. of**
**Civil and Environmental Eng., 741 Baldwin**
**Hall**
**(ML-No. 71), Cincinnati, OH 45221-0071(US)**

(74) Representative: **Patentanwälte Deufel- Schön-**
**Hertel- Lewald**
**Isartorplatz 6**
**W-8000 München 2(DE)**

(54) **Novel product/process/application for improving carbon adsorptive capacity by oxygen addition in aqueous systems.**

(57) Activated carbon adsorbents have long been used for the removal of impurities, including solubilized organic compounds, from aqueous systems. The present invention relates to the timely infusion of oxygen in carbon adsorption beds in a manner that significantly increases the adsorptive capacity of the carbons used, thereby lengthening the useful (pre-breakthrough) life of the carbons. Generally, oxygen is added to the aqueous system before or while the aqueous feed passes through the carbon adsorption bed. As a result, the adsorption process is more rapidly and effectively carried out, resulting in lower costs, less down (bed regeneration) time and more efficient operation than is otherwise found in prior art aqueous adsorption systems. The adsorption apparatus/process/method of preparation of the present invention has been found to be effective for removing a variety of organic compounds from aqueous streams in the absence of biological activity. The formulation of the carbons used, the form, amount and method of infusing oxygen into the aqueous feed stream, as well as other factors, can be varied to adjust performance characteristics so as to meet industrial, research and other performance criteria, to achieve enhanced removal of specific organic compounds, to extended the useful (pre-breakthrough) life of carbon beds, as well as to obtain other advantages useful in a variety of applications. The effect of infusing oxygen into the aqueous stream can increase the adsorption bed life by as much as 200% in some cases, depending on the organic compounds present and the makeup of the aqueous feed.

# NOVEL PRODUCT/PROCESS/APPLICATION FOR IMPROVING CARBON ADSORPTIVE CAPACITY BY OXYGEN ADDITION IN AQUEOUS SYSTEMS

## FIELD OF THE INVENTION

The present invention relates to improving the efficiency of activated carbon adsorption beds used in aqueous systems, and more specifically, to increasing the adsorptive capacity of carbons in the absence of bioactivity for removing organic compounds by infusing molecular oxygen into the aqueous system, thereby extending the bed's useful (pre-breakthrough) life and reducing the frequency and associated expense of bed regeneration or replacement.

## BACKGROUND OF THE INVENTION

Activated carbons have long been used to remove dissolved organic compounds from aqueous systems. These carbons, including granular activated carbons (GAC), powdered activated carbons (PAC) and others, are useful in a variety of industrial and other applications and have often involved the use of special impregnates and additives to remove materials from aqueous systems that would not otherwise be removed through the use of base carbons.

A variety of applications and processes exist involving granulated activated carbon in aqueous systems. A number of references also address explanations for an area of research that previously mislead researchers understanding the discrepancies noted in isotherm test results as compared to actual column test results. The Appendix to this application sets forth the pertinent references, which are also briefly discussed below.

There is a large body of prior knowledge as to the use of activated carbon to oxidize specific waste water constituents in situ. Some of these processes describe only the interaction of dissolved oxygen (DO) and carbon while others discuss the growth of biofilms in conjunction with the removal of constituents. However, the use of reactive agents (e.g., ozone or hydrogen peroxide) is not pertinent to the present invention.

The use of so-called bacteriological activated carbon (BAC) has been practiced for some time. Biofilms are frequently grown on granular activated carbon (GAC) or powdered activated carbon (PAC). In Europe, BAC has been used in potable water production as well as for waste water treatment, while in the United States this type of process has been reserved principally for waste water treatment. It has been reported for these bio-GAC systems that there can be a threshold limit concentration for the contaminants of concern, as in the case of phenol (Weit, 1978). It was reported that bio-oxidation is inhibited beyond a specific phenol concentration, therefore, it was recommended that maintaining a concentration below this level in the bioreactor should be practiced. Also, it was reported that introducing oxygen rather than air to a bioreactor would improve aerobic oxidation performance (Weit, 1978). It was assumed that transfer of oxygen was facilitated by use of molecular oxygen rather than oxygen from the dissolution of air, even when the same DO levels were achieved.

U.S. Patent 4,053,396 describes a process for balancing the introduction of oxygen into the effluent from an anaerobic stream prior to its introduction to a GAC bed. The purpose of the oxygen is to suppress the formation of hydrogen sulfide from the anaerobic system. It was recommended that oxygen be introduced to the GAC bed at a level ranging from 0.05-0.15 pound of oxygen consumed per pound of total COD (chemical oxygen demand) contaminants removed. The emphasis was aerobic bioactivity in this process. Exxon was granted Japanese Patent 51/102350 for essentially the same process.

British patent 1,527,301 discloses that organic and nitrogenous material are removed from partly purified waste water by passing the water in the presence of 9.2 ppm dissolved oxygen (DO) over GAC. In addition, pulses of air were used to momentarily reverse the flow of the stream, thereby effectively backwashing the GAC bed. It was claimed that the organic and nitrogenous compounds were removed without the addition of a bacterial matrix, evidently because bioresidue from the anaerobic system is carried into the carbon. Since the onset of bioactivity within a GAC bed may be seen within 24 hours (Tsezos, 1980) in such a case, bioactivity is believed to be the predominant removal mechanism reported in the British patent.

In addition to biodegradation of organics, it has been reported that activated carbon can be regenerated in situ biologically (Chudyk, 1984). It was reported that for a GAC influent of a pH 7.5 mineral medium, 2 mg/l phenol, and a DO concentration of 9 mg/l, a GAC preloaded with phenol could be bioregenerated. However, if the DO concentration was below 4 mg/l, no bioregeneration occurred, though biodegradation was said to have still been prevalent.

Aeration prior to GAC has been reported to have a beneficial effect on the rate of adsorption of chemically oxidizable organic compounds in dyeing waste water (Saito, 1986). Although the rate of adsorption of these waste water constituents was seen to increase in the presence of aeration, no capacities were reported in this work.

A Swedish group investigated the effect of air oxidation of sorbic acid and phenol in the presence of activated carbon under sterile conditions (Alemark, 1982). They concluded that carbon did not act as an oxidation enhancer for these compounds in the absence of microorganisms. Although the Alemark study debates the claim of aqueous phase oxidation of specific contaminants over carbon, there are a number of publications which address the oxidation of sulfides and cyanides in the presence of carbon.

It has been reported that a carbon treated with a PTFE (Teflon) suspension was 10 times more effective at oxidizing $Na_2S$ than a non-treated carbon (Mori, 1989). It has also been reported that $Na_2S$ was effectively oxidized using a slurry of activated carbon particles (Sada, 1986). The pH range for this work was pH 8-12 and a bubbling reactor was used. Other researchers have shown the removal of SCN-, CN-, amino acids, aldehydes, and diethylamine is greatly enhanced by oxygen addition (Shiiki, 1976). The removal of $H_2S$ from waste water is improved by oxygen addition (Japanese patent 50/146155) as is the removal of Cu-, Zn-, and Cd-cyanide complexes (Bursova, 1987). In the Japanese patent, however, $CuSO_4$ and $CuCl_2$ were added initially to act as promoters for the oxidation of the cyanide complexes listed. Finally, (Hoeke 1970) reports that soluble organic contaminants, nitrites, and cyanides are removed by oxidation with oxygen from air over carbon. It is claimed that carbon serves as a reactant in these applications and does not need to be regenerated or replaced even after long periods of usage.

It is well known in the literature that GAC and PAC will adsorb dissolved oxygen from water. It has been noted (Prober, 1975) that after 1700 hours of equilibration, virgin and reactivated GAC and PAC had not achieved equilibrium for oxygen uptake. When the carbons were analyzed, it was discovered that surface functional groups, particularly -COOH groups, increased after equilibration.

It has been noted that although the solubility of oxygen in water was not affected by a background matrix of phenol, the rate of oxygen uptake by carbon was dramatically improved by the presence of phenol (Sylvester, 1980). Also, the final oxygen capacity was increased by the presence of phenol in the water. The authors did not, however, examine the effect of this increased oxygen uptake on subsequent phenol removal.

Granular Activated Carbon (GAC) is widely used in both water and wastewater treatment as an adsorbent for the removal of organic pollutants because the capacity of GAC for the retention of organic compound is large compared to other traditional adsorbents (i.e. , silica, alumina, zeolites, etc.). This capacity is often described by an adsorption isotherm which represents the equilibrium quantity of adsorbate retained per unit mass of adsorbent, $q_e$, at the concentration of adsorbate in solution, $C_e$, at a constant temperature. Isotherm data are most commonly obtained using the, so called, bottle-point technique. A discussion of some of the pitfalls often encountered in conducting an isotherm test is given by Randtke and Snoeyink (1983).

A standardized procedure for conducting isotherm experiments has not yet been established. Most researchers employ varying experimental procedures for the collection of isotherm data. These procedures differ in carbon preparation, particle size (pulverized versus intact granular carbon), volume of the bottles used in the experiment, volume of sorbate solution added, buffer application and equilibration time allowed. As a result, many different isotherms for the same compound and the same GAC are given in literature. Peel and Benedek (1980) reported that particle size, the presence or absence of a weak buffer, and the initial concentration of adsorbate, had no effect on the equilibrium relationship. On the other hand, Weber and Morris (1964) found that GAC capacity was strongly affected by particle size. Since the attainment of equilibrium with small particles is much faster than that using large particles, the findings of Weber and Morris (1964) may be an artifact of insufficient contact time. This conclusion was supported by data from several other investigators (Randtke and Snoeyink, 1983; Martin and Al-Bahrani, 1978). Contradictory findings regarding the effect of initial concentration on GAC capacity are also reported. Crittenden and Weber (1978) and van Vliet et al. (1980) found GAC capacities to be higher for the lower initial concentration while Peel and Benedek (1980), Yonge et al. (1985) and Zogorski et al. (1976) experienced no effect of initial concentration.

Adsorption data can also be obtained using batch reactor and column methods. Theoretically, equilibrium data are independent of the way in which they are obtained and GAC capacities must be in agreement irrespective of the experimental procedure adopted. However, many researchers reported that such was not always the case (Crittenden and Weber, 1978; van Vliet et al., 1980; Yonge et al., 1985; Liu and Weber, 1981; Reschke et al., 1986). The explanations for this discrepancy include:

1. A continuous decrease in liquid phase sorbate concentration during the equilibration period (Yonge et al., 1985);

2. an irreversible adsorption effect (Yonge et al., 1985);

3. a decline in intraparticle diffusion rate during the later part of breakthrough, as saturation is approached (van Vliet et al., 1980); and

4. the difference in diffusion processes into macropores and micropores (Peel and Benedek, 1981; Seidel and Gelbin, 1986; Seidel et al. 1985).

There has been no systematic study regarding the effects of the presence of molecular oxygen on adsorption equilibrium. It has been shown that oxygen adsorbs to a significant extent on GAC (10-40 mg/g) which increases acidic surface oxides (Prober et al., 1975). This shows up as increased base sorption capacity, particularly in the pH ranges for carboxylic acid groups. Coughlin and Ezra (1968) found that oxidation of the surface of an active carbon, that results in increased quantity of acidic oxygen, lowered the capacity of the carbon for adsorption of phenol and nitrobenzene. Magne and Walker (1986) showed that chemisorption of oxygen on activated carbons at 573 $^\circ$K prior to phenol adsorption reduces the initial capacity of the carbon for the retention of phenol.

The additional GAC adsorptive capacity observed in the presence of oxygen as described in this invention presents a major problem in modeling adsorption columns. Existing adsorption models used for the prediction of breakthrough patterns from a GAC reactor include certain assumptions required to achieve better agreement between measured and predicted values. Crittenden and Weber (1978) introduced the use of reduced isotherms which account for only a fraction of the aerobic adsorptive capacity. These "pseudo"-isotherms were assumed to be parallel to the ones determined experimentally.

Consequently, the use of reduced isotherms falls more under the category of data fitting and does not represent a viable general procedure. Peel and Benedek (1981) showed that models describing adsorption kinetics using one film diffusion coefficient and one diffusivity within the GAC particle, predicted column breakthroughs that are delayed when compared to the measured ones. They suggested that two adsorption processes were taking place simultaneously: fast adsorption in the macropore region that accounts for approximately 70% of total aerobic isotherm capacity and is dominant during the early period of breakthrough and a slower diffusivity that takes place in the region of micropores and becomes important during the later part of breakthrough. Peel and Benedek (1981) concluded that the distribution of macropores and micropores as determined from rate studies depends on the initial concentration of adsorbate. Peel and Benedek (1981) presented no physical explanation for these conclusions, but rather arrived at this interpretation as the means for obtaining congruence between model predictions and experimental data.

The most significant problem associated with prior art carbon bed adsorbers in aqueous systems, (including water treatment and purification applications), centers around the adsorptive capacity of the carbon bed prior to breakthrough of the soluble impurities contained in the aqueous system. In large-volume (flow rate) water treatment systems, the carbon beds eventually reach their capacity for adsorbing organic compounds in solution. Once breakthrough occurs, the system has effectively failed, as impurities (in this case, the soluble organic compounds) are able to breech the carbon bed. Frequent regeneration or replenishment of the carbon adsorption bed involves additional expense each time it must be performed, and involves system down time or the requirement and additional expense of a backup system if the system must operate without interruption.

Accordingly, it is the objective of the present invention to maximize the pre-breakthrough adsorptive capacity of activated carbon beds in aqueous systems. This objective includes reducing the frequency at which regeneration or carbon replenishment of the adsorption bed must be performed, thereby improving both the performance and efficiency of these systems, and reducing the expense associated with bed regeneration and potentially eliminating the need for a backup adsorption system to be used during primary system regeneration.


## SUMMARY OF THE INVENTION


Generally, the present invention comprises the timely infusion of molecular oxygen into activated carbon adsorbents as used in aqueous adsorption systems. Specific applications of the present invention comprise the use of granulated, powdered, or other types of activated carbon adsorbent in wastewater purification/treatment systems, as well as a variety of research, industrial, commercial and other uses and applications. Specific uses for the present invention include the removal of organic compounds, including o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to reaction with oxygen from aqueous systems. The advantage found in the present invention over the prior art lies in the innovation that permits significant increases in the adsorptive capacity of carbon beds in aqueous systems in the absence of biological activity. In this sense, the present invention greatly improves the performance of these carbon beds and extends the useful (pre-breakthrough) life of the beds, thereby reducing the frequency and associated expense in regenerating these carbon beds.

Granular activated carbon (GAC) is widely used in both water and wastewater treatment, specifically as an adsorbent for the removal of organic pollutants. Numerous studies have been made to establish procedures for predicting the performance of GAC adsorbers. One of the key components needed for the scaling-up of experimental data is the capacity of GAC for the retention of a certain compound, given by the adsorption isotherm. Researchers have reported that the capacities obtained from isotherms, following traditional procedures, exceeded the capacities observed for bench-scale column studies and full-scale GAC adsorbers, as was discussed in the Background section. Because of this discrepancy between isotherms and column data, a study was initiated to investigate the parameters that affect adsorption equilibria. The results obtained led to a completely new approach in the design and operation of activated carbon adsorbers that will improve the performance and cost effectiveness of these adsorbers.

The benefits achieved by oxygen addition were initially contemplated and observed during and subsequent to several bottle point isotherm tests performed with F-400 16 x 20 U.S. mesh carbon and cresol. Preliminary work was followed up with additional isotherm and column studies.

## BRIEF DESCRIPTION OF THE DRAWINGS

Figure 1 is a plot of the adsorption isotherm series tests for o-cresol;
Figure 2 is a plot of the adsorption isotherm series tests for phenol;
Figure 3 is a plot of the adsorption isotherm series tests for 3-ethylphenol;
Figure 4 is a plot of the adsorption isotherm series tests for o-chlorophenol;
Figure 5 is a plot of the o-cresol column studies breakthrough curve derived under "aerobic" conditions;
Figure 6 is a plot of the breakthrough curve comparison for the column III adsorption tests; and
Figure 7 is a plot of the effect of oxygen on breakthrough of o-cresol.

## DESCRIPTION OF THE PREFERRED EMBODIMENTS

Isotherm Series Test Method:

Bottle point isotherms were performed using a tumbling bottle method. A pH 7 buffer solution ($KH_2PO_4$ and NaOH) was prepared in large volumes and a stock adsorbate solution was diluted into the buffer solution.

The carbon used for the anaerobic tests, 16x20 U.S. mesh-size Filtrasorb 400, was deoxygenated by purging the carbon container with $N_2$ periodically for 3 days before it was used. All experiments were performed with no head space in the isotherm bottles. The initial concentrations of o-cresol, phenol, p-cresol, o-chlorophenol and 3-ethylphenol were 200 and 1000 ppm. The 160ml flasks were purged with nitrogen to displace oxygen, and different doses of the deoxygenated carbon were added to each flask. The buffered, stock solutions were sparged with nitrogen gas prior to addition to the flasks, also. Oxygen was excluded from the bottles prior to and during addition of constant aliquots of the stock solution by purging with nitrogen gas.

The aerobic isotherms were performed in a manner similar to the anaerobic isotherms. The differences were the carbon was always in contact with air prior to addition to the sample bottles, the buffered solutions were sparged with pure oxygen prior to use, and the sample bottles were purged with oxygen while the carbon and solution were added.

The isotherm bottles, including two blanks, were then closed with rubber stoppers, crimped with aluminum caps and were agitated on a tumbler for two weeks or more. (Preliminary tests proved the period of two weeks to be sufficient for equilibrium between the adsorbed phase and the liquid phase to occur.)

The carbon-containing liquid samples removed from the isotherms were filtered through 0.45 micron Millipore filters. Residual adsorbate in the filtrate was evaluated with a Perkin-Elmer Lambda 3B UV/VIS spectrophotometer at a wavelength of 269 nm.

## Isotherm Series Test Results:

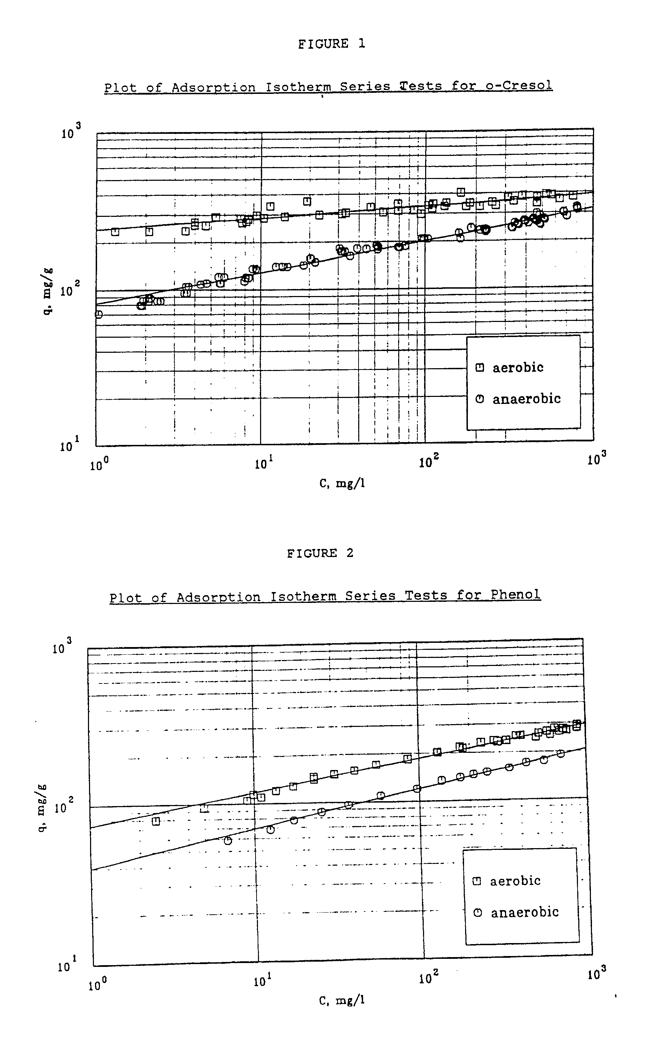

The o-cresol series of isotherm test results for the 16x20 mesh F-400 carbon are presented in graphical form in Figure 1.

Following the aforementioned carbon filtration, the carbons from the 3g carbon doses from the aerobic and anaerobic isotherms were treated with methanol to remove water and then extracted methanol to remove water and then extracted with $CH_2Cl_2$. The 3g doses from the "aerobic" and "anaerobic" isotherms were both extracted. The extracts were subjected to CG/Mass Spectrometer analysis. Results of this analysis suggest that dimers, trimers and tetramers of cresol were removed from the "aerobic" carbon while only cresol was detected in the "anaerobic" extract. Also, a mass balance was completed on the extraction efficiency for both carbons. The "aerobic" carbon had a 20-30% extraction efficiency in removing cresol while the "anaerobic" carbon achieved a significantly higher efficiency of 70%.

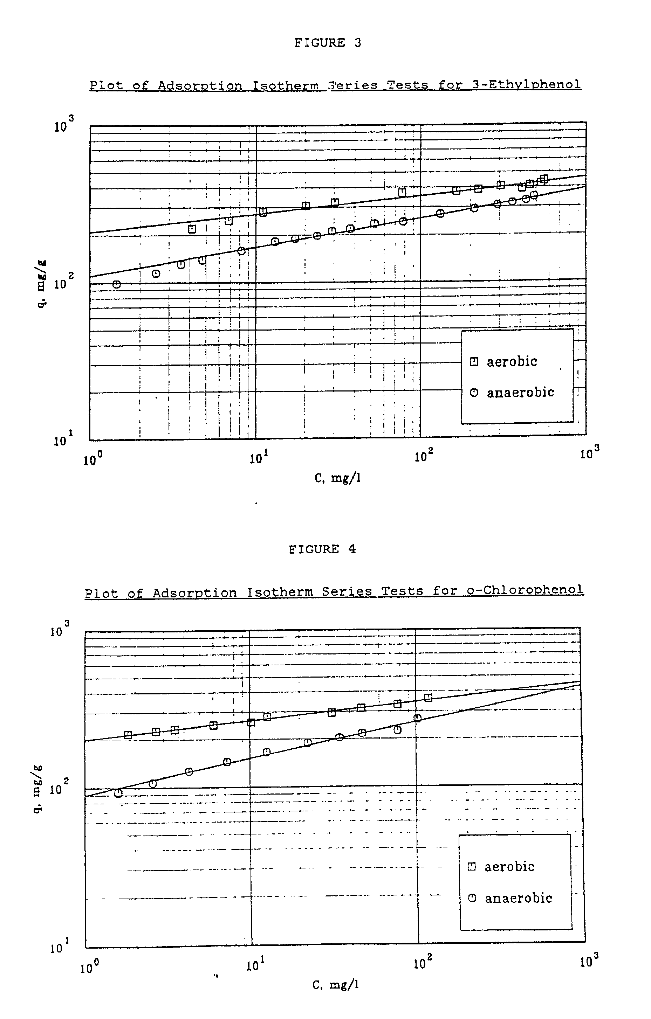

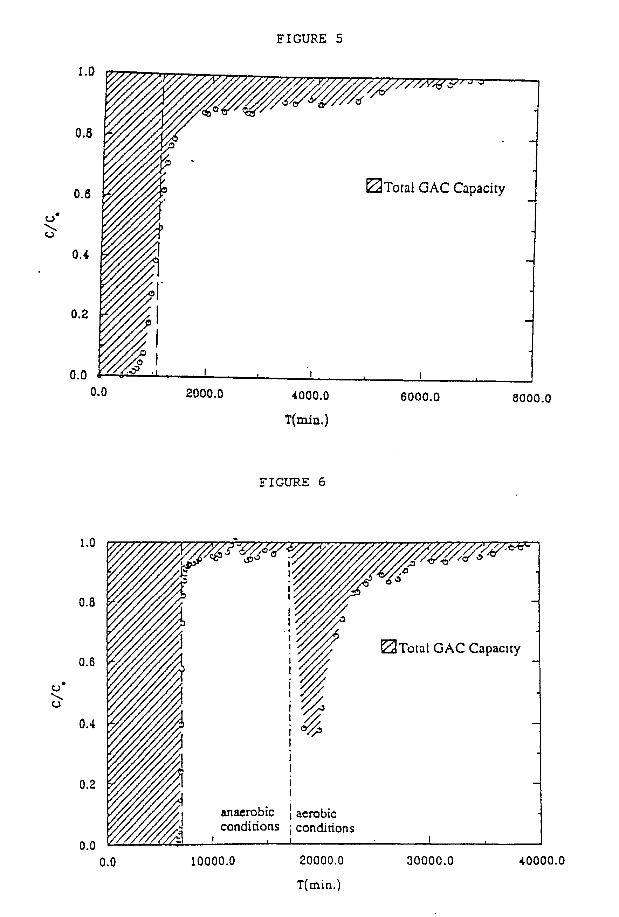

The isotherm test results for the F-400 16x20 U.S. mesh size carbon for phenol are presented in graph form in Figure 2, the isotherm test results for the F-400 16x20 U.S. mesh size carbon for 3-ethylphenol are presented in graph form in Figure 3, and the isotherm test results for the F-400 16x20 U.S. mesh size carbon for o-chlorophenol are presented in graph form in Figure 4.

## Summary of Isotherm Series Tests:

The "anaerobic" isotherm results obtained using this method, as first shown in Figure 1, indicated an appreciably lower GAC capacity for the adsorption of o-cresol than the "aerobic" isotherm. It was also determined that the elimination of oxygen from the carbon pores or from the water and the head space in the bottle induced a drop in capacity similar to that observed from the data collected under completely anaerobic conditions. The identical phenomenon was also observed with the adsorption isotherm tests for phenol, 3-ethylphenol and o-chlorophenol, which are shown in Figures 2, 3 and 4.

The filtered samples from both the aerobic and anaerobic isotherms were evaluated by TOC analysis and UV 269 absorption to determine whether o-cresol was being biologically degraded. The results indicated o-cresol degradation was not occurring. The low extraction efficiencies obtained for the carbon used in the aerobic procedure compared to that obtained for carbon used in anaerobic procedure, indicates a stronger bonding between carbon surface and o-cresol occurs in the presence of oxygen.

The Freundlich Isotherm parameters obtained by evaluating the Figure 1 through 4 isotherms (calculated using nonlinear least square regression analysis), are listed in Table I. The difference in the Table R ratios of aerobic versus anaerobic isotherm capacities are due to real increases in adsorption capacities rather than biological activity.

TABLE I

| Freundlich Isotherms Constants $q_e = KC_e^{1/n}$ | | | | |
|---|---|---|---|---|
| Compound | Isotherm Type | 1/n | K | Ratio of Aerobic to Anaerobic Capacity for $C_e$ = 1mg/L |
| o-Cresol | aerobic | 0.0686 | 243.8 | 2.98 |
| | anaerobic | 0.197 | 81.91 | |
| Phenol | aerobic | 0.201 | 74.02 | 1.849 |
| | anaerobic | 0.239 | 40.03 | |
| 3-Ethylphenol | aerobic | 0.113 | 210.9 | 1.92 |
| | anaerobic | 0.183 | 110.04 | |
| o-Chlorophenol | aerobic | 0.118 | 200.95 | 2.23 |
| | anaerobic | 0.227 | 90.09 | |
| P-cresol | aerobic | 0.1134 | 178.6 | 1.66 |
| | anaerobic | 0.151 | 107.8 | |
| DOC* (Dissolved Organic Carbon) | aerobic | 1.82 | 2.85 | 1.68 |
| | anaerobic | 1.59 | 1.698 | |

* Calculated values for DOC (dissolved organic carbon) vary depending on water sample.used.

Column Series Tests:

Breakthrough curves were determined using one-inch I.D. glass columns containing 100g of 16x20 U.S. mesh Filtrasorb 400 activated carbon. Preparations for the column studies included washing the 16 x 20 mesh fraction thoroughly in buffer solution prior to starting the actual column run. Columns were run in an upflow mode. Silica beads were located at both ends of the column, effectively sandwiching the carbon between them. This prevented any movement of the carbon bed during the experiment. Buffered o-cresol solutions were prepared in 55 gal. drums at a concentration of 214.8 mg/l. $O_2$ or $N_2$ was added by purging for 30 minutes while rapidly stirring the drums. An $O_2$ or $N_2$ residual was ensured by filling plastic bags with the desired gas and sealing it to the opening at the top of the drum. The flow rate was 0.1 l/min. Figure 5 presents the o-cresol breakthrough curve derived under aerobic conditions.

The GAC capacity in Figure 5 calculated from the square wave passing through the 0.5 $C/C_0$ point (50% breakthrough), compares extremely well with the anaerobic isotherm. The total capacity of the column, represented by the shaded area of Figure 5, was accurately predicted by the aerobic isotherm. This experiment was conducted using oxygenated deionized water solutions having a dissolved oxygen concentration averaging 6 mg/l.

A study was then conducted using five columns, each charged with 200 g of activated carbon, and operated in series with a constant influent o-cresol concentration of 205.4 mg/l and a constant flow rate of 0.1 l/min. This experiment was kept under anaerobic conditions until complete breakthrough was reached after 12 days. The o-cresol capacity calculated from the square wave passing through the 50% breakthrough point for all five columns are set forth in Table II. These results compare favorably with the anaerobic isotherm capacity shown in Figure 1.

After saturation was achieved under anaerobic conditions, fully aerobic conditions were provided by saturating the influent solution with oxygen and keeping the feed solution under a head space of oxygen. Upon the introduction of oxygen, additional capacity for the removal of o-cresol was observed in all the columns. The system was monitored for the period of 30 days; capacities for the removal of o-cresol calculated from the total breakthrough curves, as set forth in Table II, also agreed with the Figure 1 aerobic isotherm results.

TABLE II

| GAC Adsorptive Capacities for the Removal of o-cresol | | |
|---|---|---|
| Column Number | Anaerobic Capacity based on the 50% breakthrough (mg/g) | Aerobic Capacity (mg/g) |
| I | 230.1 | 358.9 |
| II | 231.8 | 369.9 |
| III | 232.0 | 374.7 |
| IV | 233.9 | 374.6 |
| V | 232.9 | 375.5 |

The breakthrough curve comparison for Column III tests (from the Table II series) is shown in Figure 6. The total shaded area represents a carbon adsorptive capacity of 374.7 mg/g of GAC, while the capacity from the aerobic o-cresol series isotherm tests was 351.3 mg./GAC. Inorganic carbon analysis and spectroscopic scanning of liquid samples throughout the experiment again confirmed that no biological activity was induced when aerobic conditions were imposed on the system.

Finally, in order to conclusively demonstrate the effect of dissolved oxygen concentrations in the aqueous feed to GAC adsorbers, four GAC columns were operated in parallel. Each column was packed with 200g of 16x20 U.S. mesh GAC, and fed a solution containing 50 mg/l. of o-cresol at a flow rate of 100 ml./min. The influent concentrations of dissolved oxygen were varied as follows:

| Column | Dissolved Oxygen (mg./l.) |
|---|---|
| 1 | 1 |
| 2 | 4 |
| 3 | 9 |
| 4 | 40 |

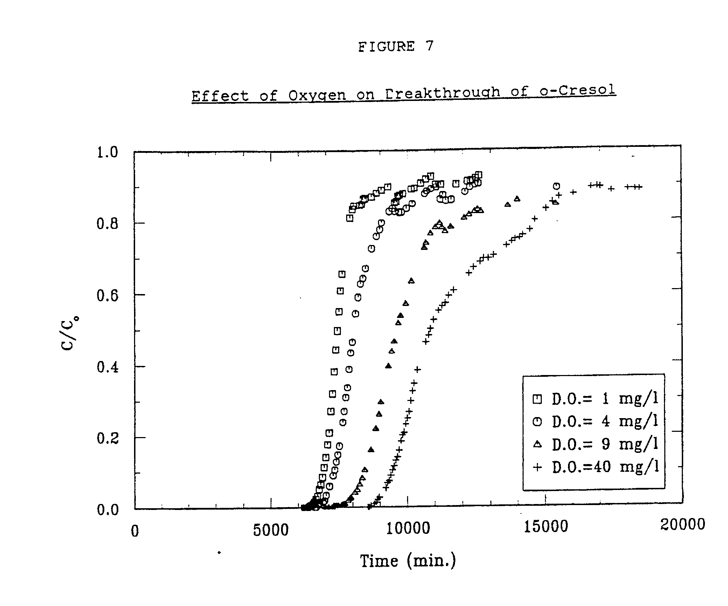

The Breakthrough curves (shown in Figure 7) indicate that as the oxygen concentration was increased in each column, the useful GAC bed life lengthened.

Conclusions:

Specifically, the Figure 7 data, analyzed in conjunction with the results of the isotherm tests as shown in Figure 1, indicate that the most significant improvement in bed life is achieved with oxygen addition to aqueous feeds containing lower concentrations of o-cresol. A similar outcome in column applications is expected with phenol, 3-ethylphenol, o-chlorophenol and other aromatic compounds based on the isotherm data in Figures 2-4.

The isotherm and column studies demonstrated that oxygen infused into aqueous feed streams containing aromatic/organic compounds, including o-cresol, p-cresol, phenol, 3-ethylphenol, o-chlorophenol and others, is in fact consumed during the adsorption process in granulated carbon adsorption beds. In consuming the oxygen, the useful life of these carbon beds (prior to breakthrough of the organic compounds) has been proven to be significantly extended.

The lower limit on how much oxygen infused into an aqueous stream prior to carbon bed filtration will enhance the useful life of the carbon bed is nonexistent. Any amount of oxygen will serve to improve the life of the carbon bed. The greater the amount of oxygen, the greater the improvement seen.

In preferred embodiments of the present invention, the amount of oxygen that should be infused into an aqueous stream prior to carbon adsorption will vary depending on the type and concentrations of organic compounds present in the aqueous stream to be filtered, the pressure (1 atm or higher) used in the system, the form of the oxygen present (from air or pure), the type of carbon used in the bed, and other factors. In any event, the oxygen should be fed to some excess of the amount actually necessary under the aforementioned conditions to insure that the all the oxygen in not consumed; to practice the invention otherwise due to anticipated swings in one or more conditions would be to limit the improvement and the extension of useful carbon bed life that could otherwise be attained.

The upper limit on how much oxygen can be usefully infused into the aqueous stream prior to carbon bed adsorption is limited only by the amount of oxygen that will remain in the aqueous feed solution (approximately 40-45 mg/l. at 1 atm). Under pressurized filtration systems, this amount can be increased, again commensurate with the amount of oxygen that will remain in the aqueous feed at a specific pressure and temperature.

Therefore, based on the isotherm studies and follow-up column studies on the effects of oxygen addition, the adsorptive capacity of carbon beds used in aqueous systems can clearly be improved through the addition of pure or molecular oxygen in the aqueous feed. By increasing the adsorptive capacity of the carbons used in removing organic compounds such as water pollutants, the useful (pre-breakthrough) life of adsorption beds can be extended, and the frequency and expense of carbon bed regeneration or replenishment can be significantly reduced.


## Claims

1. A filtration system for an aqueous stream comprising an activated carbon bed for removing oxygen reactive organic compounds from said aqueous stream and apparatus for infusing molecular oxygen into said aqueous stream positioned upstream of said activated carbon adsorption bed.

2. A filtration system as set forth in Claim 1 wherein said organic compounds include o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to oxidation, and wherein said apparatus for infusing molecular oxygen is capable of infusing from 1 mg of molecular oxygen per liter of aqueous stream to a maximum mg of molecular oxygen that remains in solution in the aqueous feed when said aqueous stream is pressurized.

3. A filtration system as set forth in Claim 1 where said organic compounds, include o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to reactions with oxygen, wherein said oxygen infusing apparatus infuses from 1 to 40 mg of molecular oxygen per liter of aqueous feed at atmospheric pressure into said aqueous stream.

4. A process for removing oxygen reactive organic compounds from an aqueous system using an activated carbon absorption bed, the improvement therewith comprising infusing molecular oxygen into an aqueous stream for filtration by said activated carbon adsorption bed.

5. A process as set forth in Claim 4 wherein said organic compounds include o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to oxidation, and wherein from 1 mg of molecular oxygen per liter of aqueous feed to a maximum mg of molecular oxygen that remains in solution is infused into said aqueous stream.

6. A process as set forth in Claim 4 wherein said organic compounds include o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to oxidation, wherein 1 to 40 mg of molecular oxygen per liter of aqueous feed is infused into said aqueous stream system at atmospheric pressure.

7. A method of preparation of an aqueous stream for filtration by an activated carbon adsorption bed to remove oxygen reactive organic compounds from said aqueous stream which comprises infusing molecular oxygen into said aqueous stream.

8. A method of preparation of an aqueous stream for filtration by an activated carbon adsorption bed to remove organic compounds as set forth in Claim 7, wherein said organic compounds include o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to oxidation, and wherein from 1 mg of molecular oxygen per liter of aqueous feed to the maximum mg of molecular oxygen that will remain in solution is infused into said aqueous stream.

9. A method of preparation of an aqueous stream for filtration by an activated carbon adsorption bed to remove organic compounds as set forth in Claim 7, wherein said organic compounds include o-cresol, p-cresol, phenol, 3-ethylphenol, o-chlorophenol, naturally occurring Total Organic Carbon (TOC), aromatic, cyclic and polycyclic organic compounds and other compounds with oxygen functionality or reactivity or otherwise susceptible to oxidation, and wherein from 1 to 40 mg of molecular oxygen per liter of aqueous feed is infused into the aqueous stream at atmospheric pressure.

FIGURE 1

Plot of Adsorption Isotherm Series Tests for o-Cresol

FIGURE 2

Plot of Adsorption Isotherm Series Tests for Phenol

FIGURE 3

Plot of Adsorption Isotherm Series Tests for 3-Ethylphenol

FIGURE 4

Plot of Adsorption Isotherm Series Tests for o-Chlorophenol

EP 0 422 585 A2

FIGURE 5

FIGURE 6

FIGURE 7

Effect of Oxygen on Breakthrough of o-Cresol